# EUROPÄISCHE PATENTSCHRIFT

(11) **EP 3 496 125 B1**
(45) Veröffentlichungstag und Bekanntmachung des Hinweises auf die Patenterteilung: **11.05.2022**
(21) Anmeldenummer: 18206416.2
(22) Anmeldetag: 15.11.2018
(51) Int. Cl.: H01H 25/06, H01H 36/00, G05G 1/08, H01H 19/06, H01H 19/11, H01H 19/14, H01H 19/20, H01H 19/62

(54) **BETÄTIGUNGSEINRICHTUNG MIT MAGNETEN**
ACTUATING DEVICE WITH MAGNETS
DISPOSITIF D'ACTIONNEMENT POURVU D'AIMANTS

(30) Priorität: 05.12.2017 DE 102017128820
(43) Veröffentlichungstag der Anmeldung: 12.06.2019
(73) Patentinhaber: Vorwerk & Co. Interholding GmbH, 42275 Wuppertal (DE)
(72) Erfinder: Charopoulos, Philipp, 40223 Düsseldorf (DE); Thies, Felix, 42115 Wuppertal (DE)
(74) Vertreter: Müller, Enno

(56) Entgegenhaltungen:
- DE-A1-102014 111 715
- JP-U- S62 102 216

## Beschreibung

### Gebiet der Technik

Die Erfindung betrifft eine Betätigungseinrichtung zum Übermitteln einer Benutzereingabe an eine Steuereinrichtung, wobei die Betätigungseinrichtung ein einen ersten Gehäuseteil der Betätigungseinrichtung bildendes Angriffselement und ein einen zweiten Gehäuseteil der Betätigungseinrichtung bildendes Ausführelement aufweist, wobei das Angriffselement einen durch Drückbetätigung der Betätigungseinrichtung in Richtung des Ausführelementes verlagerbaren Angriffsdrückmagneten aufweist, dessen Magnetfeld in das Ausführelement ragt, wobei das Angriffselement und das Ausführelement zumindest einen parallel zu einer zwischen diesen verlaufenden Zwischenebene verlagerbaren Angriffsrotiermagneten bzw. Ausführrotiermagneten aufweisen, wobei der Angriffsrotiermagnet des Angriffselementes eingerichtet ist, eine magnetische Kraft auf den korrespondierenden Ausführrotiermagneten des Ausführelementes auszuüben, wobei das Angriffselement eine orthogonal zu der Zwischenebene orientierte Rotationsachse und einen um die Rotationsachse rotierbaren, den Angriffsrotiermagneten aufweisenden Angriffselementrotierbereich aufweist, und das Ausführelement eine orthogonal zu der Zwischenebene orientierte Rotationsachse und einen um die Rotationsachse rotierbaren, den Ausführrotiermagneten aufweisenden Ausführelementrotierbereich aufweist, wobei das Angriffselement und das Ausführelement über den Angriffsrotiermagneten und den Ausführrotiermagneten miteinander verbunden sind, welche sich gegenseitig anziehende magnetische Kräfte bereitstellen, und wobei es durch die entgegengesetzte Polarisierung von Angriffsrotiermagnet und Ausführrotiermagnet bei Rotation des Angriffselementrotierbereiches mitsamt des Ausführrotiermagneten zu einer Rotation des den Ausführrotiermagneten tragenden Ausführelementrotierbereiches kommt.

Des Weiteren betrifft die Erfindung eine elektromotorisch betriebene Küchenmaschine mit einem ein Gerätegehäuse aufweisenden Basisgerät, welches eine Betätigungseinrichtung zum Übermitteln einer Benutzereingabe an eine Steuereinrichtung der Küchenmaschine aufweist.

### Stand der Technik

Betätigungseinrichtungen der vorgenannten Art sind im Stand der Technik bekannt, unter anderem auch für elektromotorisch betriebene Küchenmaschinen.

Eine solche Betätigungseinrichtung funktioniert durch Wirkung magnetischer Kräfte, welche von korrespondierenden Magneten innerhalb getrennter Teilbereiche der Betätigungseinrichtung ausgehen. Die Betätigungseinrichtung erfordert durch die Nutzung der Magnetkräfte keinen Durchtritt der Betätigungseinrichtung durch das Gerätegehäuse. Es ist somit kein Durchbruch durch beispielsweise eine Blende einer elektromotorisch betriebenen Küchenmaschine notwendig. Dadurch ergeben sich eine bessere Reinigbarkeit der Geräteoberfläche sowie eine Vermeidung des Eintritts von Staub, Schmutz, Flüssigkeit und dergleichen in das Gerätegehäuse.

Die Druckschrift EP 0 430 612 A2 offenbart beispielsweise eine Betätigungseinrichtung, welche einen Einstellknopf aufweist, der über eine außerhalb eines Gehäuses angeordnete Welle drehbar ist, wobei eine Bewegung des Einstellknopfes durch Wirkung magnetischer Kräfte auf ein innerhalb des Gehäuses angeordnetes Bauteil übertragbar ist. Der Einstellknopf und das Bauteil sind als kreisförmige, elliptische oder polygonförmige Platten ausgebildet und stehen einander, durch eine Wandung des Gehäuses getrennt, gegenüber. Das Bauteil und der Einstellknopf tragen korrespondierende Magnete, durch die eine Rotationsbewegung des Einstellknopfes auf das Bauteil übertragbar ist.

Die Druckschrift DE 10 2014 111 715 A1 offenbart eine Betätigungseinrichtung gemäß dem Oberbegriff des Anspruchs 1, und zudem ein Laborgerät mit einem Bedienelement, welches einen um eine Drehachse drehbaren Drehknopf umfasst, in welchem wiederum ein Drucktaster integriert ist. Eine dem Tastelement zugeordnete Detektoreinrichtung detektiert ein Magnetfeld eines mit dem Tastelement verlagerten Permanentmagneten. Dem Drehknopf ist eine Magnetkupplung zugeordnet, die einen Drehimpuls des Drehknopfes an drehgeberseitige Permanentmagnete überträgt.

Die Druckschrift JP S62102216 U offenbart ebenfalls eine Drück-Betätigungseinreichtung mit einem Permannentmagneten.

### Zusammenfassung der Erfindung

Ausgehend von dem vorgenannten Stand der Technik ist es Aufgabe der Erfindung, eine magnetisch arbeitende Betätigungseinrichtung zu schaffen, welche die Übermittlung einerDrück-Dreh-Eingabe eines Nutzers noch komfortabler gestaltet.

Zur Lösung dieser Aufgabe wird vorgeschlagen, dass das Ausführelement einen Ausführdrückmagneten aufweist, der berührungslos durch Wirkung des Magnetfeldes des Angriffsdrückmagneten verlagerbar ist, und dass das Angriffselement ein einen verlagerbaren Angriffselementdrückbereich aufweisendes Angriffselementgehäuse aufweist, wobei der Angriffselementdrückbereich eingerichtet ist, den Angriffsdrückmagneten in Richtung des Ausführelementes zu verlagern, wobei der Angriffselementdrückbereich den Angriffselementrotierbereich bezogen auf eine Umfangsfläche des Angriffselementrotierbereiches und eine von der Zwischenebene abgewandte Stirnseite des Angriffselementrotierbereiches umfängt und relativ zu diesem axial verlagerbar ist, und wobei das Angriffselementgehäuse des Weiteren einen in Kontakt mit der Zwischenebene stehenden, die Rotationsachse aufweisenden Teilbereich aufweist, welcher den Angriffselementdrückbereich und den Angriffselementrotierbereich von der Zwischenebene beabstandet.

Das Angriffselement und das Ausführelement der Betätigungseinrichtung weisen zumindest je einen parallel zu einer zwischen diesen verlaufenden Zwischenebene verlagerbaren Magneten aufweisen, wobei ein Angriffsrotiermagnet des Angriffselementes eingerichtet ist, eine magnetische Kraft auf einen korrespondierenden Ausführrotiermagneten des Ausführelementes auszuüben. Durch diese zusätzliche Implementierung von korrespondierenden Rotiermagneten innerhalb des Angriffselementes und des Ausführelementes, wird die Betätigungseinrichtung zusätzlich mit einer Drehfunktion ausgestattet, welche neben einer Drückbetätigung auch eine Drehbetätigung der Betätigungseinrichtung detektieren kann. Die Betätigungseinrichtung weist somit zumindest ein zusätzliches Magnetpaar auf, welches eine Rotation des Angriffselementes auf das Ausführelement übertragen kann. Insbesondere empfiehlt es sich, mehrere derartige Magnetpaare vorzusehen, um die Übertragung der Magnetkraft sicherzustellen. Insbesondere wird die Verwendung von zwei, drei oder vier Magnetpaaren bevorzugt, wobei jedoch auch die Verwendung noch weiterer Magnetpaare möglich ist. Die korrespondierenden Rotiermagnete des Angriffselementes und des Ausführelementes sorgen zudem für eine optimale Positionierung und Fixierung des Angriffselementes an einem die Zwischenebene aufweisenden Gerät, so dass das Angriffselement beispielsweise zu Reinigungszwecken von dem Gerät abgenommen werden kann und bei einem erneuten Aufsetzen über die Magnetkräfte der Magnetpaare wieder zurück in die optimale Position an der Zwischenebene findet. Aus der magnetischen Anziehung der korrespondierenden Rotiermagnete entsteht eine Haftreibung zwischen dem Angriffselement und dem Gerätegehäuse. Zusätzlich kann für eine stärkere Positionssicherung des Angriffselementes auch eine formschlüssige Verbindung vorgesehen sein, beispielsweise durch eine Senke oder eine Erhebung an dem Gerätegehäuse, mit welcher ein entsprechendes Gegenstück des Angriffselementes mechanisch wechselwirken kann. Die korrespondierenden Angriffsrotiermagnete und Ausführrotiermagnete ziehen sich gegenseitig an, so dass es bei einer Verlagerung eines Angriffsrotiermagneten in einer Ebene parallel zu der Zwischenebene gleichzeitig auch zu einer entsprechenden Bewegung des korrespondierenden Ausführrotiermagneten kommt.

Die Betätigungseinrichtung verfügt über korrespondierende, orthogonal zu einer zwischen dem Angriffselement und dem Ausführelement verlaufenden Zwischenebene verlagerbare Magnete, welche magnetisch miteinander wechselwirken. Beispielsweise sind die Magnete eines solchen Magnetpaares so angeordnet, dass sich diese bei Annäherung abstoßen. Bei einer Betätigung der Betätigungseinrichtung kommt es zunächst zu einer Verlagerung eines Magneten des Angriffselementes, d. h. des Angriffsdrückmagneten, dessen Magnetfeld den in dem Ausführelement angeordneten Magneten, d. h. den Ausführdrückmagneten, abstößt. Die Verlagerung des Ausführdrückmagneten kann durch einen Sensor detektiert werden, wodurch eine Betätigung der Betätigungseinrichtung erkannt wird. Der Sensor kann beispielsweise ein Positionssensor oder Kontaktsensor sein. Vorzugsweise wird bei der Verlagerung des Ausführdrückmagneten gleichzeitig ein bewegungsfest mittelbar oder unmittelbar mit diesem verbundener Pin verlagert, der einen entsprechenden Gegenkontakt eines Encoders schließt. Alternativ sind zur Auswertung der Verlagerungsstellung des Ausführdrückmagneten auch andere Sensoren anwendbar, die mittels optischer, elektronischer oder mechanischer Messverfahren funktionieren.

Es wird vorgeschlagen, dass das Angriffselement ein Angriffselementgehäuse mit einem verlagerbaren Angriffselementdrückbereich aufweist, welcher eingerichtet ist, den Angriffsdrückmagneten in Richtung des Ausführelementes zu verlagern. Der verlagerbare Angriffselementdrückbereich des Angriffselementes kann beispielsweise ein Teilbereich eines verlagerbaren Deckelelementes sein, welches gegenüber einem benachbarten Teilbereich des Angriffselementgehäuses in Richtung des Ausführelementes gedrückt werden kann. Bei seiner Bewegung kann der Angriffselementdrückbereich beispielsweise gegen einen in dem Angriffselement gelagerten Angriffsdrückmagneten stoßen und diesen in Richtung des Ausführelementes verlagern, so dass dessen Magnetfeld auf den Ausführdrückmagneten einwirken kann, d. h. diesen ebenfalls verlagert.

In diesem Zusammenhang kann insbesondere vorgesehen sein, dass der Angriffsdrückmagnet bewegungsfest an dem Angriffselementdrückbereich angeordnet ist. Gemäß dieser Ausgestaltung trägt der Angriffselementdrückbereich selbst den Angriffsdrückmagneten, so dass es bei einer Verlagerung des Angriffselementdrückbereiches automatisch auch zu einer Verlagerung des Angriffsdrückmagneten kommt. Insbesondere kann der Angriffsdrückmagnet fest mit einem beweglichen Deckelelement des Angriffselementes verbunden sein.

Des Weiteren wird vorzugsweise vorgeschlagen, dass dem Angriffselementdrückbereich ein Federelement zugeordnet ist, dessen Rückstellkraft von dem gedrückten Angriffselementdrückbereich aus betrachtet von dem Ausführelement weg gerichtet ist, so dass der Angriffselementdrückbereich bei Aufheben der Drückbetätigung der Betätigungseinrichtung von dem Ausführelement weg verlagert wird. Um den Angriffselementdrückbereich in Richtung des Ausführelementes zu verlagern, ist die Rückstellkraft des Federelementes zu überwinden. Sobald der Angriffselementdrückbereich losgelassen wird, wirkt die Rückstellkraft in entgegengesetzte Richtung und verlagert den Angriffselementdrückbereich zurück in die Ausgangsstellung. Durch diese Ausgestaltung kann die Betätigungseinrichtung vorzugsweise nach der Art eines Tasters ausgebildet sein.

Des Weiteren wird vorgeschlagen, dass das Ausführelement einen den Ausführdrückmagneten aufweisenden Ausführelementdrückbereich aufweist, welcher von dem Angriffselement weg verlagerbar ist. Der Ausführelementdrückbereich trägt den Ausführdrückmagneten und kann beispielsweise nach der Art eines Pins ausgebildet sein, welcher ausgebildet ist, in der von dem Angriffselement weg verlagerten Stellung einen Kontakt eines Encoders zu schließen. Der Ausführelementdrückbereich ist bezogen auf seine Verlagerung vorzugsweise geführt, beispielsweise in einer als Führungskulisse ausgebildeten Struktur eines Ausführelementgehäuses.

In diesem Zusammenhang wird als vorteilhaft vorgeschlagen, dass dem Ausführelementdrückbereich ein Federelement zugeordnet ist, dessen Rückstellkraft in Richtung des Angriffselementes gerichtet ist, so dass der Ausführelementdrückbereich bei Aufheben einer Drückbetätigung der Betätigungseinrichtung in Richtung des Angriffselementes verlagert wird. Die Rückstellkraft des Federelementes versucht, den Ausführelementdrückbereich nach Betätigung der Betätigungseinrichtung zurück in eine Ausgangsstellung zu drücken, welche einer Stellung nahe des Angriffselementes entspricht. In einem unbetätigten Zustand der Betätigungseinrichtung ist die Rückstellkraft des Federelementes größer als beispielsweise eine abstoßende Wirkung zwischen den korrespondierenden Magneten des Angriffselementes und des Ausführelementes. Wenn jedoch die Betätigungseinrichtung betätigt wird und damit das Angriffselement den Angriffsdrückmagneten in Richtung des Ausführelementes verlagert, verringert sich der Abstand zwischen dem Angriffsdrückmagnet und dem Ausführelement, so dass der auf der anderen Seite einer Zwischenebene befindliche Ausführdrückmagnet gegen die Rückstellkraft des ihm zugeordneten Federelementes von dem Ausführelement weg verlagert wird. Der den Ausführdrückmagnet tragende Ausführelementdrückbereich verlagert sich somit in eine neue Gleichgewichtslage, welche von einem Encoder detektiert werden kann. Sobald der Angriffselementdrückbereich wieder von einem Nutzer losgelassen wird, kann die Rückstellkraft des Federelementes den Ausführelementdrückbereich mitsamt des Ausführdrückmagneten zurück in die Vorzugsstellung verlagern. Alternativ wäre es auch möglich, dass die korrespondierenden Drückmagnete von Angriffselement und Ausführelement sich nicht gegenseitig abstoßen, sondern anziehen, so dass es bei einer Verlagerung des Angriffsdrückmagneten in Richtung des Ausführelementes zu einer Verlagerung des Ausführdrückmagneten in Richtung des Angriffselementes kommt. Für die Rückstellung des Ausführdrückmagneten in die Ausgangsstellung wäre das Federelement somit so anzuordnen, dass dieses den Ausführdrückmagnet von dem Angriffselement zu beabstanden sucht, wenn die Rückstellkraft die anziehende Kraft der korrespondierenden Drückmagnete übersteigt.

Es wird vorgeschlagen, dass das Angriffselement eine orthogonal zu der Zwischenebene orientierte Rotationsachse und einen um die Rotationsachse rotierbaren, den Angriffsrotiermagneten aufweisenden Angriffselementrotierbereich aufweist, und/oder dass das Ausführelement eine orthogonal zu der Zwischenebene orientierte Rotationsachse und einen um die Rotationsachse rotierbaren, den Ausführrotiermagneten aufweisenden Ausführelementrotierbereich aufweist. In dem Angriffselementgehäuse bzw. dem Ausführelementgehäuse befindet sich eine bezogen auf den zusammengebauten Zustand der Betätigungseinrichtung orthogonal zu der Zwischenebene orientierte Rotationsachse, um welche ein Angriffselementrotierbereich bzw. Ausführelementrotierbereich rotieren kann. Die Rotationsachse kann beispielsweise über einen entsprechenden Gehäuseteilbereich auf der Zwischenebene, d. h. einem dazwischen angeordneten Teilbereich eines Gerätegehäuses, stehen. Sofern ein Nutzer der Betätigungseinrichtung einen Teilbereich des Angriffselementgehäuses relativ zu der Zwischenebene rotiert, kommt es gleichzeitig zu einer Rotation des Angriffselementrotierbereiches. Der Teilbereich des Angriffselementgehäuses und der Angriffselementrotierbereich können als ein Teil ausgebildet sein bzw. bewegungsfest miteinander verbunden sein oder als separate Teile ausgebildet sein, wobei beispielsweise ein Teilbereich des Angriffselementgehäuses, welches ein Nutzer bei der Drehbetätigung der Betätigungseinrichtung rotiert, auf einen Angriffselementrotierbereich einwirkt, beispielsweise indem der Teilbereich den Angriffselementrotierbereich in Rotationsrichtung vor sich herschiebt. Dies kann je nach der Ausgestaltung des Angriffselementgehäuses vorteilhaft sein, insbesondere um Angriffselementdrückbereich und Angriffselementrotierbereich bezogen auf ihre mechanische Wirkung voneinander zu trennen. Der Ausführelementrotierbereich des Ausführelementes kann ein in einem Ausführelementgehäuse angeordneter Teil des Ausführelementes sein, da dieser keinen Wirkkontakt zu dem Gehäuse des Ausführelementes aufweisen muss. Des Weiteren befindet sich ein dem Ausführelementrotierbereich zugeordneter Encoder ebenfalls innerhalb des Ausführelementgehäuses. Eine Rotierbarkeit eines Teilbereiches des Ausführelementgehäuses ist nicht erforderlich.

Es wird vorgeschlagen, dass der Angriffselementrotierbereich und/ oder der Ausführelementrotierbereich rotierbar gelagerte Scheibenkörper sind. Diese Scheibenkörper können jeweils einen oder mehrere Magnete aufnehmen, die jeweils mit einem Magneten des gegenüberliegenden Ausführelementes bzw. Angriffselementes korrespondieren.

Vorzugsweise wird vorgeschlagen, dass eine Umfangsfläche des Ausführelementrotierbereiches eine sich in Umfangsrichtung fortsetzende Struktur zum Eingriff eines Kontaktelementes eines Rotationssensors aufweist. Sofern der Ausführelementrotierbereich beispielsweise ein Scheibenkörper ist, ist die Struktur ringförmig auf der Umfangsfläche des Scheibenkörpers ausgebildet. Ein Rotationssensor der Betätigungseinrichtung bzw. eines die Betätigungseinrichtung aufweisenden Gerätes kann beispielsweise ein gefedertes Kontaktelement aufweisen, welches in die Struktur eingreift und dadurch für den Nutzer ein haptisches Feedback über die Drehbetätigung erzeugt. Vorzugsweise kann das Kontaktelement ein Teil eines Drehencoders der Betätigungseinrichtung bzw. des Gerätes sein, welcher die Drehbewegung zur Ermittlung der Benutzereingabe auswertet.

Schließlich wird mit der Erfindung neben der zuvor beschriebenen Betätigungseinrichtung auch eine elektromotorisch betriebene Küchenmaschine mit einem ein Gerätegehäuse aufweisenden Basisgerät vorgeschlagen, welches eine Betätigungseinrichtung zum Übermitteln einer Benutzereingabe an eine Steuereinrichtung der Küchenmaschine aufweist, wobei die Betätigungseinrichtung gemäß einer der zuvor beschriebenen Ausführungen ausgebildet ist, und wobei die zwischen dem Angriffselement und dem Ausführelement verlaufende Zwischenebene ein Teilbereich des Gerätegehäuses ist. Vorzugsweise ist das Ausführelement der Küchenmaschine fest innerhalb des Basisgerätes verbaut, während ein Nutzer der Küchenmaschine das korrespondierende außenliegende Angriffselement von dem Basisgerät trennen kann, um beispielsweise eine Reinigung der Gehäuseoberfläche des Basisgerätes durchzuführen.

Eine elektromotorisch betriebene Küchenmaschine im Sinne der Erfindung kann beispielsweise ein kombiniertes Koch-Mix-Gerät sein, welches ein Basisgerät und ein mit dem Basisgerät verbindbares Zubereitungsgefäß aufweist. Das Zubereitungsgefäß kann beispielsweise in einem Bodenbereich über eine Bodenöffnung verfügen, durch welche ein Teilbereich eines Rührwerklagers hindurchgeführt werden kann, um eine Rotationswelle des Rührwerklagers mit einer Motorwelle eines Elektromotors des Basisgerätes zu verbinden. Die Betätigungseinrichtung kann, insbesondere in Verbindung mit einer auf einem Display des Basisgerätes angezeigten Menüführung, zur Auswahl von Rezepten, zur Bestätigung von Eingaben oder dergleichen dienen.

### Kurze Beschreibung der Zeichnungen

Im Folgenden wird die Erfindung anhand von Ausführungsbeispielen näher erläutert. Es zeigen:
- Fig.: 1 eine erfindungsgemäße elektromotorisch betriebene Küchenmaschine,
- Fig.: 2 eine Schnittdarstellung einer erfindungsgemäßen Betätigungseinrichtung,
- Fig.: 3 eine Explosionsdarstellung der Betätigungseinrichtung.

### Beschreibung der Ausführungsformen

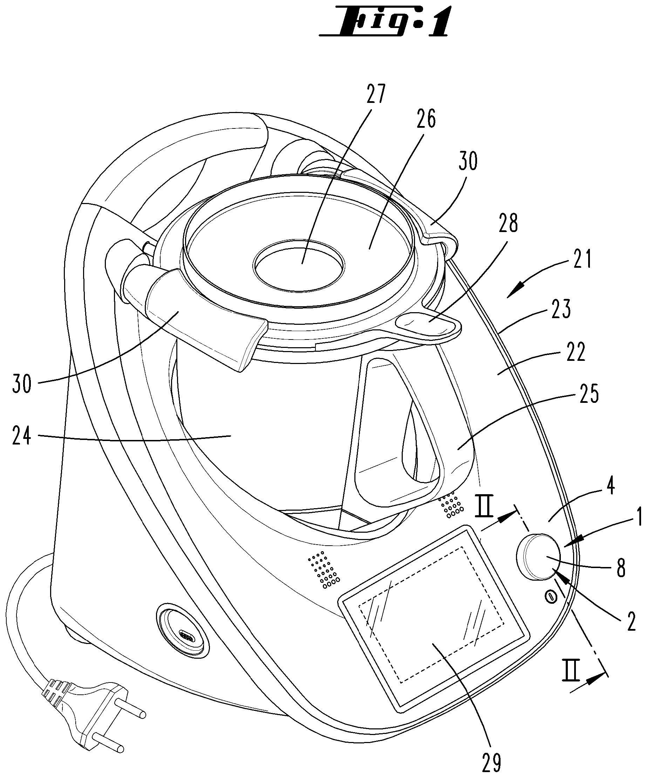

Figur 1 zeigt lediglich beispielhaft eine elektromotorisch betriebene Küchenmaschine 21, welche hier als kombiniertes Koch-Mix-Gerät ausgebildet ist. Die Küchenmaschine 21 weist ein Basisgerät 23 mit einem Gerätegehäuse 22 auf. Mit dem Basisgerät 23 ist lösbar ein Zubereitungsgefäß 24 verbunden. Das Zubereitungsgefäß 24 verfügt in einem Bodenbereich über eine Bodenöffnung (nicht dargestellt), durch welche ein Teilbereich eines Rührwerklagers (nicht dargestellt) hindurchgeführt werden kann, um dieses mit einer Motorwelle eines Elektromotors der Küchenmaschine 21 zu verbinden. Das Zubereitungsgefäß 24 weist einen Griff 25 und einen Deckel 26 mit einer Deckelöffnung 27 auf. Durch die Deckelöffnung 27 können während des Betriebs der Küchenmaschine 21 beispielsweise Zutaten in das Zubereitungsgefäß 24 gegeben werden. Der Deckel 26 weist des Weiteren einen Deckelgriff 28 auf. An dem Basisgerät 23 sind des Weiteren ein Display 29 (hier zum Beispiel ein Touchscreen) sowie eine Betätigungseinrichtung 1 angeordnet, über welche eine Menüführung der Küchenmaschine 21 gesteuert werden kann, beispielsweise um die Zubereitung von Speisen anhand eines ausgewählten Rezeptes zu steuern. Auf dem Display 29 können dem Nutzer beispielsweise einzelne Abarbeitungsschritte einer automatischen Rezeptzubereitung angezeigt werden, sowie benötigte Zutaten für die Zubereitung, die der Nutzer in das Zubereitungsgefäß 24 einzufüllen hat. Mittels der Betätigungseinrichtung 1 kann der Nutzer beispielsweise eine Eingabe bestätigen, einzelne Abarbeitungsschritte starten und dergleichen. Der Deckel 26 des Zubereitungsgefäßes 24 wird mit Hilfe von zwei Verriegelungswalzen 30 an dem Zubereitungsgefäß 24 fixiert, so dass es bei einem Betrieb der Küchenmaschine 21 nicht zu einem ungewünschten Öffnen des Zubereitungsgefäßes 24 kommen kann.

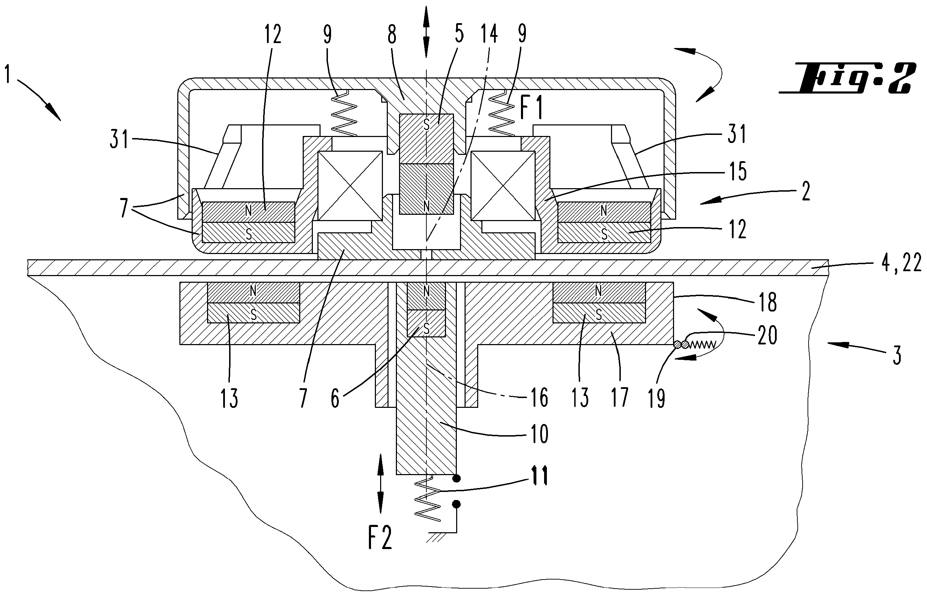

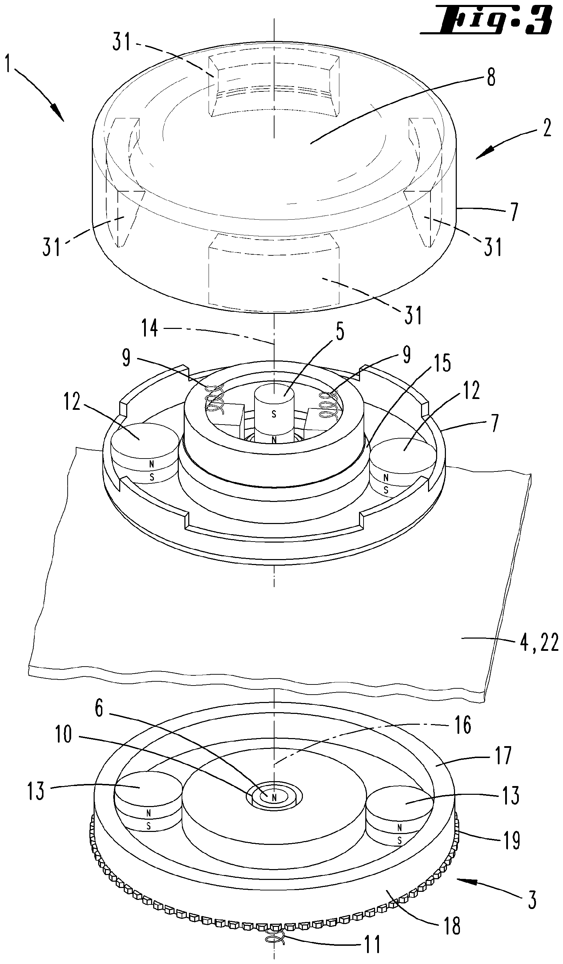

Die Betätigungseinrichtung 1 ist hier als ein Drück-Dreh-Knopf ausgebildet, welcher Benutzereingaben sowohl per Drücken als auch per Drehen der Betätigungseinrichtung 1 erlaubt. Die Figuren 2 und 3 zeigen die Betätigungseinrichtung 1 im Detail, wobei ein Teilbereich des Gerätegehäuses 22 der Küchenmaschine 21 jeweils als Zwischenebene 4 dargestellt ist.

Die Betätigungseinrichtung 1 weist ein außerhalb des Gerätegehäuses 22 befindliches Angriffselement 2 und ein innerhalb des Gerätegehäuses 22 ausgebildetes Ausführelement 3 auf. Das Angriffselement 2 und das Ausführelement 3 sind durch die Zwischenebene 4, welche Teil des Gerätegehäuses 22 ist, getrennt. Die Betätigungseinrichtung 1 durchstößt die Zwischenebene 4 nicht, vielmehr sind das Angriffselement 2 und das Ausführelement 3 über Angriffsrotiermagnete 12 des Angriffselementes 2 und Ausführrotiermagnete 13 des Ausführelementes 3 miteinander verbunden, welche sich gegenseitig anziehende magnetische Kräfte bereitstellen. Dabei steht jeweils einem Südpol (S) eines Angriffsrotiermagneten 12 ein Nordpol (N) eines Ausführrotiermagneten 13 gegenüber, so dass sich diese anziehen und dabei das Angriffselement 2 an der Zwischenebene 4 bzw. dem dahinterliegenden Ausführelement 3 halten. Zusätzlich können die Zwischenebene 4 und das Angriffselement 2 auch korrespondierende Formelemente wie beispielsweise Senken und Erhebungen aufweisen. Dies ist hier jedoch nicht dargestellt. Das Ausführelement 3 ist hier beispielsweise Bestandteil des Basisgerätes 23 der Küchenmaschine 21 und vorzugsweise fest von innen an dem Gerätegehäuse 22 befestigt.

Die Betätigungseinrichtung 1 weist hier beispielsweise zwei Magnetpaare aus je einem Angriffsrotiermagneten 12 und einem Ausführrotiermagneten 13 auf, wobei jedoch ebenso weitere Magnetpaare verwendet werden können. Grundsätzlich ist es möglich, dass die Betätigungseinrichtung 1 auch nur ein einziges Magnetpaar aus einem Angriffsrotiermagneten 12 und einem Ausführrotiermagneten 13 aufweist. Dann ist es allerdings empfehlenswert, zusätzliche Befestigungsmittel für das Angriffselement 2 an der Zwischenebene 4 vorzusehen.

Das Angriffselement 2 weist ein Angriffselementgehäuse 7 auf, welches einen relativ zu anderen Gehäuseteilen des Angriffselementes 2 verlagerbaren Angriffselementdrückbereich 8 aufweist. Dem Angriffselementdrückbereich 8 ist ein Federelement 9 zugeordnet, dessen Rückstellkraft entgegen der Richtung einer Drückbetätigung des Angriffselementes 2 gerichtet ist. In der in Figur 2 gezeigten Ausgangsstellung ist das Federelement 9 entspannt. Der Angriffselementdrückbereich 8 weist einen Angriffsdrückmagneten 5 auf, welcher bei Verlagerung des Angriffselementdrückbereiches 8 in Richtung der Zwischenebene 4 mitverlagert wird. Der Angriffsdrückmagnet 5 wirkt dabei mittels seines Magnetfeldes auf einen korrespondierenden Ausführdrückmagneten 6 des Ausführelementes 3, welcher aufgrund einer abstoßenden magnetischen Wirkung von der Zwischenebene 4 weg verlagert wird. Der Ausführdrückmagnet 6 ist wiederum Teil eines Ausführelementdrückbereiches 10, welcher verlagerbar innerhalb des Ausführelementes 3 gelagert ist. Diesem Ausführelementdrückbereich 10 ist wiederum ein Federelement 11 zugeordnet, dessen Rückstellkraft in Richtung der Zwischenebene 4 gerichtet ist. Bei einer Verlagerung des Angriffsdrückmagneten 5 des Angriffselementes 2 in Richtung der Zwischenebene 4 durchsetzt das Magnetfeld des Angriffsdrückmagneten 5 das Ausführelement 3 soweit, dass die abstoßende Wirkung auf den Ausführdrückmagneten 6 des Ausführelementes 3 wirkt und diesen entgegen der Rückstellkraft des ihm zugeordneten Federelementes 11 von der Zwischenebene 4 weg verlagert. Diese Verlagerungsstellung kann durch einen dem Ausführelementdrückbereich 10 zugeordneten Sensor detektiert werden. Eine Steuereinrichtung der Küchenmaschine 21 kann somit eine entsprechende Benutzereingabe detektieren. Beispielsweise kann der Ausführelementdrückbereich 10 einen Kontaktpin tragen, welcher einen in dem Ausführelement 3 oder dem Basisgerät 23 der Küchenmaschine 21 befindlichen Kontakt des Sensors schließt.

In einem unbetätigten Zustand der Betätigungseinrichtung 1 überwiegt eine Federkraft des dem Angriffselement 2 zugeordneten Federelementes 9 die abstoßende Kraft des Angriffsdrückmagneten 5 und des Ausführdrückmagneten 6, welche sich mit gleichartigen Polen gegenüberliegen. Wenn der Nutzer die Betätigungseinrichtung 1 betätigt, indem er den Angriffselementdrückbereich 8 in Richtung der Zwischenebene 4 drückt, werden die Pole aufeinander zu bewegt und die abstoßende Kraft steigt, bis die Rückstellkraft des dem Ausführelement 3 zugeordneten Federelementes 11 überwunden werden kann. Dadurch wird der Ausführelementdrückbereich 10, welcher den Ausführdrückmagneten 6 trägt, von der Zwischenebene 4 weg verlagert. Wenn der Nutzer den Angriffselementdrückbereich 8 wieder loslässt, verlagert die Rückstellkraft des Federelementes 11 den Ausführdrückmagneten 6 zurück in die an der Zwischenebene 4 liegende Ausgangsstellung. Der Angriffsdrückmagnet 5 wird durch die abstoßende Magnetkraft ebenfalls wieder in die in Figur 2 dargestellte Ausgangsstellung zurück verlagert, wobei die Federkraft des dem Angriffselementdrückbereich 8 zugeordneten Federelementes 9 als zusätzliche Rückstellkraft wirkt.

Das Angriffselementgehäuse 7 des Angriffselementes 2 weist des Weiteren einen Angriffselementrotierbereich 15 auf, welcher um eine Rotationsachse 14 rotierbar gelagert ist. Die Rotationsachse 14 ist Teil eines weiteren Teilbereiches des Angriffselementgehäuses 7, welcher in Kontakt mit der Zwischenebene 4 steht. Der Angriffselementrotierbereich 15 ist mittels einer Rotation des Angriffselementdrückbereiches 8 um die Rotationsachse 14 rotierbar. Dazu weist der Angriffselementdrückbereich 8 nach innen gewandte Rotationsflügel 31 auf, deren Rotationsbahn sich mit einer Rotationsbahn des Angriffselementrotierbereiches 15 überdeckt, so dass die Rotationsflügel 31 den Angriffselementrotierbereich 15 vor sich herschieben können. Bei einer Rotation des Angriffselementrotierbereiches 15 rotieren gleichzeitig die Angriffsrotiermagnete 12, welche an diesem angeordnet sind. Dadurch verlagert sich das Magnetfeld der Angriffsrotiermagnete 12. Das Magnetfeld der Angriffsrotiermagnete 12 durchsetzt die Zwischenebene 4 und greift in eine Ebene des Ausführelementes 3 ein, innerhalb welcher sich die Ausführrotiermagnete 13 befinden. Die Ausführrotiermagnete 13 sind an einem Ausführelementrotierbereich 17 des Ausführelementes 3 befestigt, welcher sich um die Rotationsachse 16 drehen kann. Sofern ein Nutzer durch Drehen des Angriffselementdrückbereiches 8 um die Rotationsachse 14 eine Verlagerung der Angriffsrotiermagnete 12 auslöst, sind die Ausführrotiermagnete 13 des Ausführelementes 3 sich ändernden Magnetfeldern ausgesetzt. Durch die entgegengesetzte Polarisierung der Angriffsrotiermagnete 12 und der Ausführrotiermagnete 13 werden die Ausführrotiermagnete 13 bei Rotation des Angriffselementrotierbereiches 15 mit verlagert, so dass es ebenfalls zu einer Rotation des die Ausführrotiermagnete 13 tragenden Ausführelementrotierbereiches 17 kommt.

Der Ausführelementrotierbereich 17 weist an einer Umfangsfläche 18 eine Struktur 19 auf, in welche ein Kontaktelement 20 eines Sensors eingreift. Das Kontaktelement 20 kann federbeaufschlagt gegen die Umgangsfläche 18 drücken, so dass beispielsweise Berge und Täler der Struktur 19 überwunden werden können. Die Struktur 19 dient dazu, einem Nutzer der Betätigungseinrichtung 1 ein haptisches Feedback über seine Drehbetätigung zu geben. Darüber hinaus kann das Kontaktelement 20 auch Teil eines Drehencoders sein, welcher eine Rotationsstellung des Ausführelementrotierbereiches 17 detektiert. In Abhängigkeit von der gewählten Rotationsstellung, d. h. dem Winkelbereich der Drehbetätigung, kann eine Steuereinrichtung der Küchenmaschine 21 auf den Inhalt eines Nutzerbefehls schließen, beispielsweise eine gewählte Temperatur für eine Heizeinrichtung, ein Drehzahlbereich für ein Rührwerk der Küchenmaschine 21 und dergleichen.

**Liste der Bezugszeichen**

| | | | |
|---|---|---|---|
| 1 | Betätigungseinrichtung | 29 | Display |
| 2 | Angriffselement | 30 | Verriegelungswalze |
| 3 | Ausführelement | 31 | Rotationsflügel |
| 4 | Zwischenebene | | |
| 5 | Angriffsdrückmagnet | | |
| 6 | Ausführdrückmagnet | | |
| 7 | Angriffselementgehäuse | | |
| 8 | Angriffselementdrückbereich | | |
| 9 | Federelement | | |
| 10 | Ausführelementdrückbereich | | |
| 11 | Federelement | | |
| 12 | Angriffsrotiermagnet | | |
| 13 | Ausführrotiermagnet | | |
| 14 | Rotationsachse | | |
| 15 | Angriffselementrotierbereich | | |
| 16 | Rotationsachse | | |
| 17 | Ausführelementrotierbereich | | |
| 18 | Umfangsfläche | | |
| 19 | Struktur | | |
| 20 | Kontaktelement | | |
| 21 | Küchenmaschine | | |
| 22 | Gerätegehäuse | | |
| 23 | Basisgerät | | |
| 24 | Zubereitungsgefäß | | |
| 25 | Griff | | |
| 26 | Deckel | | |
| 27 | Deckelöffnung | | |
| 28 | Deckelgriff | | |

## Patentansprüche

1. Betätigungseinrichtung (1) zum Übermitteln einer Benutzereingabe an eine Steuereinrichtung, wobei die Betätigungseinrichtung (1) ein einen ersten Gehäuseteil der Betätigungseinrichtung (1) bildendes Angriffselement (2) und ein einen zweiten Gehäuseteil der Betätigungseinrichtung (1) bildendes Ausführelement (3) aufweist, wobei das Angriffselement (2) einen durch Drückbetätigung der Betätigungseinrichtung (1) in Richtung des Ausführelementes (3) verlagerbaren Angriffsdrückmagneten (5) aufweist, dessen Magnetfeld in das Ausführelement (3) ragt, wobei das Angriffselement (2) und das Ausführelement (3) zumindest einen parallel zu einer zwischen diesen verlaufenden Zwischenebene (4) verlagerbaren Angriffsrotiermagneten (12) bzw. Ausführrotiermagneten (13) aufweisen, wobei der Angriffsrotiermagnet (12) des Angriffselementes (2) eingerichtet ist, eine magnetische Kraft auf den korrespondierenden Ausführrotiermagneten (13) des Ausführelementes (3) auszuüben, wobei das Angriffselement (2) eine orthogonal zu der Zwischenebene (4) orientierte Rotationsachse (14) und einen um die Rotationsachse (14) rotierbaren, den Angriffsrotiermagneten (12) aufweisenden Angriffselementrotierbereich (15) aufweist, und das Ausführelement (3) eine orthogonal zu der Zwischenebene (4) orientierte Rotationsachse (16) und einen um die Rotationsachse (16) rotierbaren, den Ausführrotiermagneten (13) aufweisenden Ausführelementrotierbereich (17) aufweist, wobei das Angriffselement (2) und das Ausführelement (3) über den Angriffsrotiermagneten (12) und den Ausführrotiermagneten (13) miteinander verbunden sind, welche sich gegenseitig anziehende magnetische Kräfte bereitstellen, und wobei es durch die entgegengesetzte Polarisierung von Angriffsrotiermagnet (12) und Ausführrotiermagnet (13) bei Rotation des Angriffselementrotierbereiches (15) mitsamt des Ausführrotiermagneten (13) zu einer Rotation des den Ausführrotiermagneten (13) tragenden Ausführelementrotierbereiches (17) kommt, wobei das Angriffselement (2) ein einen verlagerbaren Angriffselementdrückbereich (8) aufweisendes Angriffselementgehäuse (7) aufweist, wobei der Angriffselementdrückbereich (8) eingerichtet ist, den Angriffsdrückmagneten (5) in Richtung des Ausführelementes (3) zu verlagern,
**dadurch gekennzeichnet, dass** das Ausführelement (3) einen Ausführdrückmagneten (6) aufweist, der berührungslos durch Wirkung des Magnetfeldes des Angriffsdrückmagneten (5) verlagerbar ist, wobei der Angriffselementdrückbereich (8) den Angriffselementrotierbereich (15) bezogen auf eine Umfangsfläche des Angriffselementrotierbereiches (15) und eine von der Zwischenebene (4) abgewandte Stirnseite des Angriffselementrotierbereiches (15) umfängt und relativ zu diesem axial verlagerbar ist, und wobei das Angriffselementgehäuse (7) des Weiteren einen in Kontakt mit der Zwischenebene (4) stehenden, die Rotationsachse (14) aufweisenden Teilbereich aufweist, welcher den Angriffselementdrückbereich (8) und den Angriffselementrotierbereich (15) von der Zwischenebene (4) beabstandet.

2. Betätigungseinrichtung (1) nach Anspruch 1, **dadurch gekennzeichnet, dass** der Angriffsdrückmagnet (5) bewegungsfest an dem Angriffselementdrückbereich (8) angeordnet ist.

3. Betätigungseinrichtung (1) nach Anspruch 1 oder 2, **dadurch gekennzeichnet, dass** dem Angriffselementdrückbereich (8) ein Federelement (9) zugeordnet ist, dessen Rückstellkraft von dem gedrückten Angriffselementdrückbereich (8) aus betrachtet von dem Ausführelement (3) weg gerichtet ist, so dass der Angriffselementdrückbereich (8) bei Aufheben der Drückbetätigung der Betätigungseinrichtung (1) von dem Ausführelement (3) weg verlagert wird.

4. Betätigungseinrichtung (1) nach einem der vorhergehenden Ansprüche, **dadurch gekennzeichnet, dass** das Ausführelement (3) einen den Ausführdrückmagneten (6) aufweisenden Ausführelementdrückbereich (10) aufweist, welcher von dem Angriffselement (2) weg verlagerbar ist.

5. Betätigungseinrichtung (1) nach Anspruch 4, **dadurch gekennzeichnet, dass** dem Ausführelementdrückbereich (10) ein Federelement (11) zugeordnet ist, dessen Rückstellkraft in Richtung des Angriffselementes (2) gerichtet ist, so dass der Ausführelementdrückbereich (10) bei Aufheben einer Drückbetätigung der Betätigungseinrichtung (1) in Richtung des Angriffselementes (2) verlagert wird.

6. Betätigungseinrichtung (1) nach Anspruch 1, **dadurch gekennzeichnet, dass** der Angriffselementrotierbereich (15) und/oder der Ausführelementrotierbereich (17) rotierbar gelagerte Scheibenkörper sind.

7. Betätigungseinrichtung (1) nach Anspruch 1, **dadurch gekennzeichnet, dass** eine Umfangsfläche (18) des Ausführelementrotierbereiches (17) eine sich in Umfangsrichtung fortsetzende Struktur (19) zum Eingriff eines Kontaktelementes (20) eines Rotationssensors aufweist.

8. Elektromotorisch betriebene Küchenmaschine (21) mit einem ein Gerätegehäuse (22) aufweisenden Basisgerät (23), welches eine Betätigungseinrichtung (1) zum Übermitteln einer Benutzereingabe an eine Steuereinrichtung der Küchenmaschine (21) aufweist, **dadurch gekennzeichnet, dass** die Betätigungseinrichtung (1) gemäß einem der vorhergehenden Ansprüche ausgebildet ist, wobei die zwischen dem Angriffselement (2) und dem Ausführelement (3) verlaufende Zwischenebene (4) ein Teilbereich des Gerätegehäuses (22) ist.

## Claims

1. Actuating device (1) for transmitting a user input to a control device, the actuating device (1) comprising an engagement element (2) which forms a first housing part of the actuating device (1) and an execution element (3) which forms a second housing part of the actuating device (1), the engagement element (2) comprising an engagement push magnet (5) which can be moved in the direction of the execution element (3) by press-actuation of the actuating device (1), and the magnetic field of which projects into the execution element (3), the engagement element (2) and the execution element (3) comprising at least one engagement rotary magnet (12) or execution rotary magnet (13), respectively, which can be moved in parallel with an intermediate plane (4) extending therebetween, the engagement rotary magnet (12) of the engagement element (2) being designed to exert a magnetic force on the corresponding execution rotary magnet (13) of the execution element (3), the engagement element (2) comprising an axis of rotation (14) oriented orthogonally to the intermediate plane (4) and an engagement element rotation region (15) which can be rotated about the axis of rotation (14) and comprises the engagement rotary magnet (12), and the execution element (3) comprising an axis of rotation (16) oriented orthogonally to the intermediate plane (4) and an execution element rotation region (17) which can be rotated about the axis of rotation (16) and comprises the execution rotary magnet (13), the engagement element (2) and the execution element (3) being interconnected via the engagement rotary magnet (12) and the execution rotary magnet (13), which provide mutually attractive magnetic forces, and the opposite polarisation of the engagement rotary magnet (12) and the execution rotary magnet (13) resulting in a rotation of the execution element rotation region (17) supporting the execution rotary magnet (13) when the engagement element rotation region (15) rotates together with the execution rotary magnet (13), the engagement element (2) comprising an engagement element housing (7) which has a movable engagement element pressing region (8), and the engagement element pressing region (8) being designed to move the engagement push magnet (5) in the direction of the execution element (3),
**characterised in that** the execution element (3) comprises an execution push magnet (6) which can be moved in a contactless manner by the effect of the magnetic field of the engagement push magnet (5), the engagement element pressing region (8) surrounding the engagement element rotation region (15) with respect to a circumferential surface of the engagement element rotation region (15) and an end face of the engagement element rotation region (15) that faces away from the intermediate plane (4), and being axially movable relative thereto, and the engagement element housing (7) also comprising a portion which is in contact with the intermediate plane (4) and comprises the axis of rotation (14), which portion separates the engagement element pressing region (8) and the engagement element rotation region (15) from the intermediate plane (4).

2. Actuating device (1) according to claim 1, **characterised in that** the engagement push magnet (5) is arranged on the engagement element pressing region (8) so as to be stationary.

3. Actuating device (1) according to either claim 1 or claim 2, **characterised in that** a spring element (9) is associated with the engagement element pressure region (8), the restoring force of which, viewed from the pressed engagement element pressing region (8), is directed away from the execution element (3), such that the engagement element pressing region (8) is moved away from the execution element (3) when the press actuation of the actuating device (1) is terminated.

4. Actuating device (1) according to any of the preceding claims, **characterised in that** the execution element (3) comprises an execution element pressing region (10) which comprises the execution push magnet (6) and can be moved away from the engagement element (2).

5. Actuating device (1) according to claim 4, **characterised in that** a spring element (11) is assigned to the execution element pressing region (10), the restoring force of which is directed in the direction of the engagement element (2), such that the execution element pressing region (10) is moved in the direction of the engagement element (2) when a press actuation of the actuating device is terminated (1).

6. Actuating device (1) according to claim 1, **characterised in that** the engagement element rotation region (15) and/or the execution element rotation region (17) are rotatably mounted disc bodies.

7. Actuating device (1) according to claim 1, **characterised in that** a circumferential surface (18) of the execution element rotation region (17) comprises a structure (19) which continues in the circumferential direction for engaging a contact element (20) of a rotation sensor.

8. Electric motor-operated kitchen appliance (21) comprising a base device (23) which has a device housing (22) and an actuating device (1) for transmitting a user input to a control device of the kitchen appliance (21), **characterised in that** the actuating device (1) is designed according to any of the preceding claims, the intermediate plane (4) extending between the engagement element (2) and the execution element (3) being a portion of the device housing (22).

## Revendications

1. Dispositif d'actionnement (1) pour transmettre une entrée d'utilisateur à un dispositif de commande, le dispositif d'actionnement (1) présentant un élément d'attaque (2) formant une première partie de boîtier du dispositif d'actionnement (1) et un élément d'exécution (3) formant une deuxième partie de boîtier du dispositif d'actionnement (1), l'élément d'attaque (2) présentant un aimant de pression d'attaque (5) pouvant être déplacé en direction de l'élément d'exécution (3) par actionnement par pression du dispositif d'actionnement (1) et dont le champ magnétique s'étend dans l'élément d'exécution (3), l'élément d'attaque (2) et l'élément d'exécution (3) présentant au moins un aimant rotatif d'attaque (12), respectivement un aimant rotatif d'exécution (13), pouvant être déplacé parallèlement à un plan intermédiaire (4) s'étendant entre eux, l'aimant rotatif d'attaque (12) de l'élément d'attaque (2) étant conçu pour exercer une force magnétique sur l'aimant rotatif d'exécution (13) correspondant de l'élément d'exécution (3), l'élément d'attaque (2) présentant un axe de rotation (14) orienté orthogonalement par rapport au plan intermédiaire (4) et une région rotative d'élément d'attaque (15) pouvant tourner autour de l'axe de rotation (14), qui présente l'aimant rotatif d'attaque (12), et l'élément d'exécution (3) présentant un axe de rotation (16) orienté orthogonalement par rapport au plan intermédiaire (4) et une région rotative d'élément d'exécution (17) pouvant tourner autour de l'axe de rotation (16), qui présente l'aimant rotatif d'exécution (12), l'élément d'attaque (2) et l'élément d'exécution (3) étant reliés l'un à l'autre par l'intermédiaire de l'aimant rotatif d'attaque (12) et de l'aimant rotatif d'exécution (13) qui fournissent des forces magnétiques s'attirant mutuellement, la polarisation opposée de l'aimant rotatif d'attaque (12) et de l'aimant rotatif d'exécution (13) entraînant, lors de la rotation de la région rotative d'élément d'attaque (15) avec l'aimant rotatif d'exécution (13), une rotation de la région rotative d'élément d'exécution (17) portant l'aimant rotatif d'exécution (13), l'élément d'attaque (2) comprenant un boîtier d'élément d'attaque (7) présentant une région de pression d'élément d'attaque (8) qui est déplaçable, la région de pression d'élément d'attaque (8) étant agencée pour déplacer l'aimant de pression d'attaque (5) en direction de l'élément d'exécution (3),
**caractérisé en ce que** l'élément d'exécution (3) comprend un aimant de pression d'exécution (6) qui peut être déplacé sans contact par l'action du champ magnétique de l'aimant de pression d'attaque (5), dans lequel la région de pression d'élément d'attaque (8) entoure la région rotative d'élément d'attaque (15) par rapport à une surface périphérique de la région rotative d'élément d'attaque (15) et à une face frontale de la région rotative d'élément d'attaque (15) opposée au plan intermédiaire (4) et peut être déplacée axialement par rapport à celle-ci, et dans lequel le boîtier d'élément d'attaque (7) présente en outre une région partielle en contact avec le plan intermédiaire (4) laquelle présente l'axe de rotation (14) et écarte la région de pression d'élément d'attaque (8) et la région rotative d'élément d'attaque (15) du plan intermédiaire (4).

2. Dispositif d'actionnement (1) selon la revendication 1, **caractérisé en ce que** l'aimant de pression d'attaque (5) est agencé de manière immobile sur la région de pression d'élément d'attaque (8).

3. Dispositif d'actionnement (1) selon la revendication 1 ou 2, **caractérisé en ce qu'**un élément de ressort (9) est associé à la région de pression d'élément d'attaque (8), dont la force de rappel, vue depuis la région de pression d'élément d'attaque (8) pressée, est dirigée à l'opposé de l'élément d'exécution (3) de manière à déplacer la région de pression d'élément d'attaque (8) à l'opposé de l'élément d'exécution (3) lorsque l'actionnement par pression du dispositif d'actionnement (1) est supprimé.

4. Dispositif d'actionnement (1) selon l'une des revendications précédentes, **caractérisé en ce que** l'élément d'exécution (3) présente une région de pression d'élément d'exécution (10) présentant l'aimant de pression d'exécution (6), laquelle peut être déplacée de manière à l'éloigner de l'élément d'attaque (2).

5. Dispositif d'actionnement (1) selon la revendication 4, **caractérisé en ce qu'**à la région de pression d'élément d'exécution (10) est associé un élément de ressort (11) dont la force de rappel est dirigée en direction de l'élément d'attaque (2) de manière à déplacer la région de pression d'élément d'exécution (10) en direction de l'élément d'attaque (2) lors de la suppression d'un actionnement par pression du dispositif d'actionnement (1).

6. Dispositif d'actionnement (1) selon la revendication 1, **caractérisé en ce que** la région rotative d'élément d'attaque (15) et/ou la région rotative d'élément d'exécution (17) sont des corps formant disques montés rotatifs.

7. Dispositif d'actionnement (1) selon la revendication 1, **caractérisé en ce qu'**une surface périphérique (18) de la région rotative d'élément d'exécution (17) présente une structure (19) se prolongeant dans la direction périphérique pour l'engagement d'un élément de contact (20) d'un capteur de rotation.

8. Robot de cuisine (21) à moteur électrique avec un appareil de base (23) présentant un boîtier d'appareil (22) et un dispositif (1) pour transmettre une entrée d'utilisateur à un dispositif de commande du robot de cuisine (21), **caractérisé en ce que** le dispositif d'actionnement (1) est réalisé selon l'une des revendications précédentes, le plan intermédiaire (4) s'étendant entre l'élément d'attaque (2) et l'élément d'exécution (3) étant une région partielle du boîtier d'appareil (22).
